Europäisches Patentamt

European Patent Office

Office européen des brevets

(11) Numéro de publication: **0 024 989**
**A1**

## (12) DEMANDE DE BREVET EUROPEEN

(21) Numéro de dépôt: **80401214.4**

(22) Date de dépôt: **26.08.80**

(51) Int. Cl.³: **G 02 B 7/26**

(30) Priorité: **28.08.79 FR 7921563**

(43) Date de publication de la demande:
**11.03.81 Bulletin 81/10**

(84) Etats Contractants Désignés:
**BE DE GB IT NL SE**

(71) Demandeur: **SOCAPEX**
**10bis, quai Léon Blum**
**F-92153 Suresnes(FR)**

(72) Inventeur: **Lamarche, Dominique**
**"THOMSON-CSF" SCPI 173, bld Haussmann**
**F-75360 Paris Cedex 08(FR)**

(72) Inventeur: **Duquesnoy, Daniel**
**"THOMSON-CSF" SCPI 173, bld Haussmann**
**F-75360 Paris Cedex 08(FR)**

(74) Mandataire: **Eisenbeth, Jacques Pierre et al,**
**"THOMSON-CSF" - SCPI 173, bld Haussmann**
**F-75360 Paris Cedex 08(FR)**

(54) **Connecteur de fibres optiques et faisceaux de fibres équipés d'un tel connecteur.**

(57) L'invention à pour objet un connecteur de fibres optiques et un faisceau de fibres équipé d'un tel connecteur.

Chaque connecteur comporte deux embouts et des moyens d'accouplement hermaphrodites (I,II). Sur chaque embout est prévu un volet obturateur (31,32) ayant deux positions stables "ouvert" et "fermé". Lors de l'accouplement, le volet de chaque embout est déplacé par des organes prévus sur l'embout (71,81,72,82) auquel il va être connecté.

L'invention s'applique aux systèmes de transmission de la lumière par fibres optiques.

FIG. 4

EP 0 024 989 A1

CONNECTEUR DE FIBRES OPTIQUES ET FAISCEAUX DE FIBRES EQUIPES D'UN TEL CONNECTEUR.

L'invention a pour objet un connecteur de fibres optiques et un faisceau de fibres optiques équipé d'un tel connecteur.

Le problème se pose dans les télécommunications par fibres optiques de connecter des faisceaux de fibres. En général on utilise des connecteurs composés de deux embouts associés à chacun des faisceaux de fibres à connecter. Ces embouts emboités l'un dans l'autre forment le connecteur. Ce connecteur est dit hermaphrodite, quand tous les embouts ont la même forme, les parties males de l'un s'emboitant dans les parties femelles de l'autre. Le problème se pose de garder propre dans des milieux polluants les embouts de fibres optiques.

Les connecteurs selon l'invention permettent de résoudre ce problème.

Les connecteurs de fibres optiques selon l'invention sont du type hermaphrodite. Ils se caractérisent essentiellement en ce que chaque embout comporte un volet protecteur pour protéger les fibres optiques auquel il est assemblé, des moyens étant prévus sur chaque embout pour permettre l'effacement du volet de l'embout qui doit lui être associé pour former le connecteur, lors de l'opération d'assemblage des deux embouts, et pour permettre de remettre le volet à sa place, lors de l'opération de désassemblage.

L'invention sera mieux comprise au moyen de la description ci-après en se référant aux dessins annéxés parmi lesquels :

- la figure 1, est une vue en perspective d'un exemple de réalisation d'un embout coupé par le plan de symétrie longitudinale des fibres optiques associés ;

- la figure 2, représente vu dessus en exemple d'assemblage "hermaphrodite" ;

- la figure 3, est une vue en perspective d'un détail du volet d'obturation ;

- la figure 4 et 5, montrent en coupe longitudinale deux embouts avant assemblage
et après assemblage ;

- la figure 6, représente en perspective, une demi-
coupe d'embout ;

- les figures 7 et 8, représentent en perspective
les deux faces d'un plateau d'embout ;

- la figure 9, représente en perspective un deuxième exemple de volet obturateur ;

- les figures 10 et 11, représentent respectivement
en coupe longitudinale un embout avec
le volet dans ses deux positions ;

- les figures 12 à 15, représentent les phases de
la déconnexion ;

- les figures 16 à 18, représentent les phases de
la connexion.

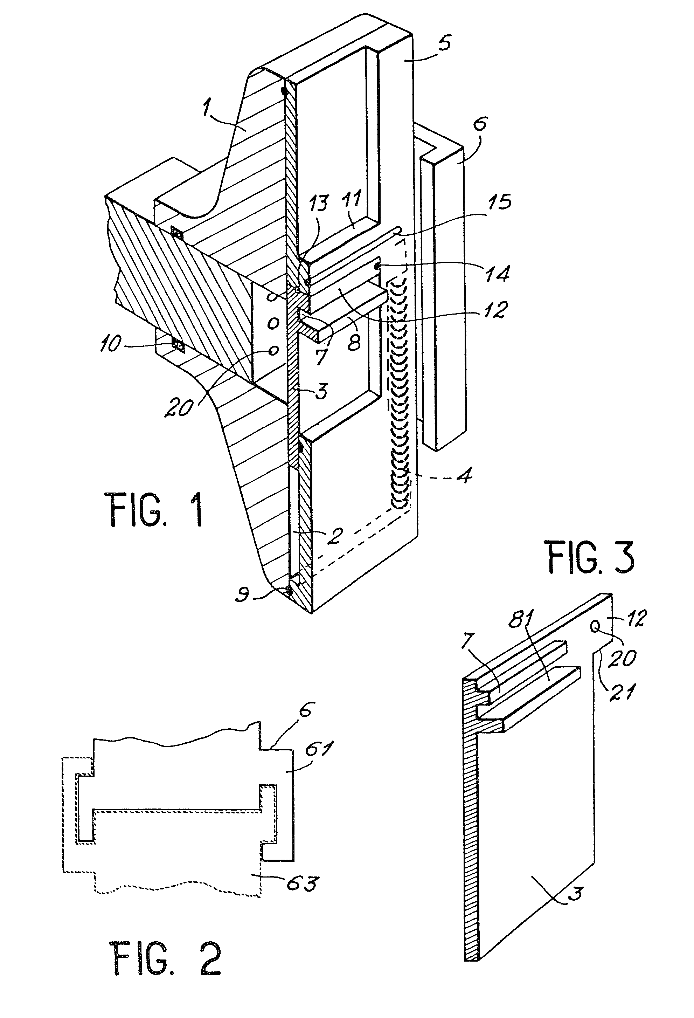

Sur la figure 1 est représenté en perspective, et
coupé par le plan de symétrie longitudinal de l'ensemble des fibres, un demi-embout de connecteur selon l'
invention. Cet embout comprends un corps 1, muni d'
un chapeau 5, dont une des faces est plane et perpendiculaire à l'axe des fibres optiques. Cette face est la
plus proche des fibres optiques 20. Le chapeau 5 est rendu solidaire par un ensemble de joints 9 du corps 1. Un
chambrage 2 permet le coulissement d'un volet mobile 3,
dans le sens des deux flèches dont la présence est la
caractéristique essentielle de l'invention. Ce volet est
maintenu en position haute ou fermée par un jeu de ressort
4 prenant appui sur le fond du chambrage d'une part, et
sur une butée solidaire du clapet, comme cela sera
expliqué plus loin. Le volet obturateur est représenté
sur la figure en position fermée, le ressort 4 travaillant
en compression. C'est l'état de l'embout avant tout accouplement. Une plaque 8 perpendiculaire au plan de la
face avant de l'embout assure comme on le verra plus

loin son entrainement en s'emboitant dans une plaque identique ménagée sur le volet de l'embout avec lequel se fera la connexion. Cette plaque fait saillie sur l'ensemble de l'embout.

Le corps 1 est solidaire des fibres à interconnecter au moyen d'un joint 10. Une butée 11 aménagée sur le corps de l'embout limite le déplacement du volet vers le haut. Cette butée coopère avec une butée 12 ménagée sur la face supérieure du volet. Sur la figure est également représentée une portion 6 de la fiche hermaphrodite qui permet l'accouplement avec un autre embout. Les références 13, 14, et 15 désignent respectivement des joints entre le volet et le chapeau 5, et les joints de la cavité.

Sur la figure 2 est représenté vu de dessus un exemple de l'hermaphrodite d'assemblage 6. La partie 61 reçoit la partie 62 de l'embout associé. L'assemblage se fait par déplacement dans un plan perpendiculaire au plan de la figure 2. Entre la butée 7 et la butée 8 qui fait saillie à l'extérieur du chapeau, est formé une cavité qui recueille les saletés extérieures entraînées par le glissement des faces externes des obturateurs. Elle est fermée par deux joints 14 et 15.

La figure 3 représente en perspective en détail un exemple de réalisation du volet obturateur. On retrouve sur ce clapet, la butée 7 la plaque 8 d'entraînement. Enfin en 20, un trou permet le verrouillage du volet dans chacune de ses positions et enfin en 21 la portée du ressort ; la forme adoptée permet un déploiement partiel du ressort quand il est armé.

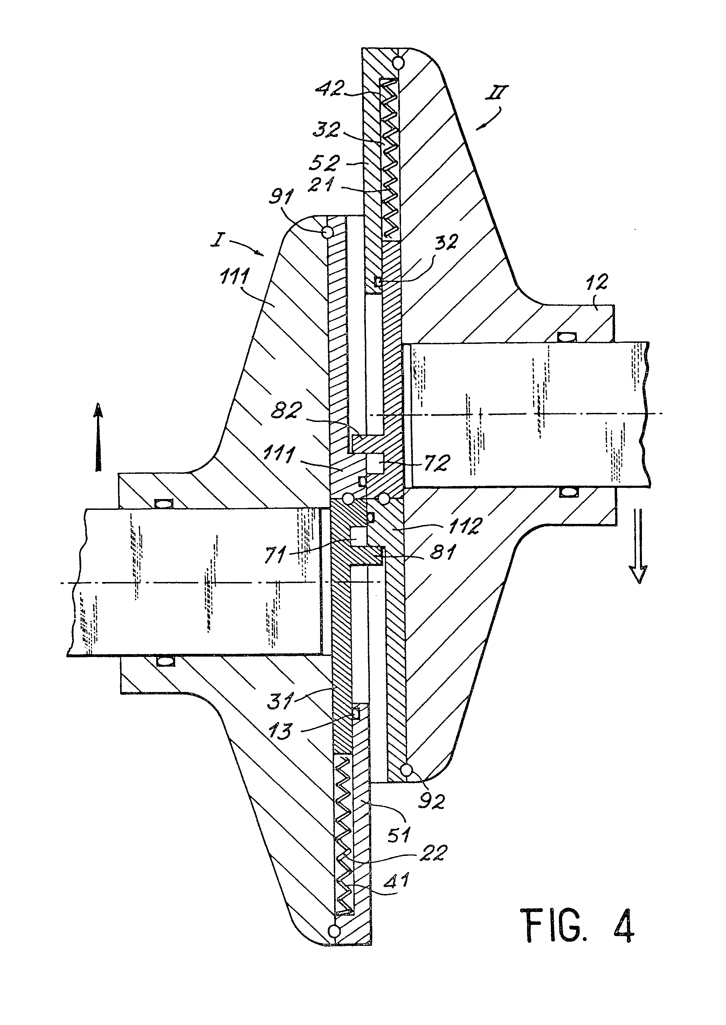

La figure 4 représente en coupe longitudinale deux embouts en cours d'accouplement, c'est-à-dire avant l'emboitement des deux dispositifs d'assemblage hermaphrodites désignés par la suite par I et II, accouplement qui se fera par coulissement vers le bas de la figure de l'embout de droite II ou au contraire de celui I de gauche vers le haut.

Les mêmes références désignent les mêmes organes que sur la figure 1, mais sont affectées de l'indice 1 pour le connecteur de gauche et de l'indice 2 pour le connecteur de droite. Ainsi les deux ressorts 4 seront respectivement le ressort 41 pour l'embout de gauche et le ressort 42 pour l'embout de droite.

Ceci étant dans la figure 4, les deux dispositifs d'accrochage sont au contact, mais pas encore emboités. Les deux ressorts 41 et 42 sont dans leurs positions de repos et, par conséquent en extension. La butée 81 du volet obturateur 31 porte sur l'épaulement 112 de l'embout de droite II. Il est de même des éléments 111 et 32.

Chacun de ces volets obturateurs peut coulisser dans son chambrage 21 pour le volet obturateur 31, 22 pour le volet obturateur 32.

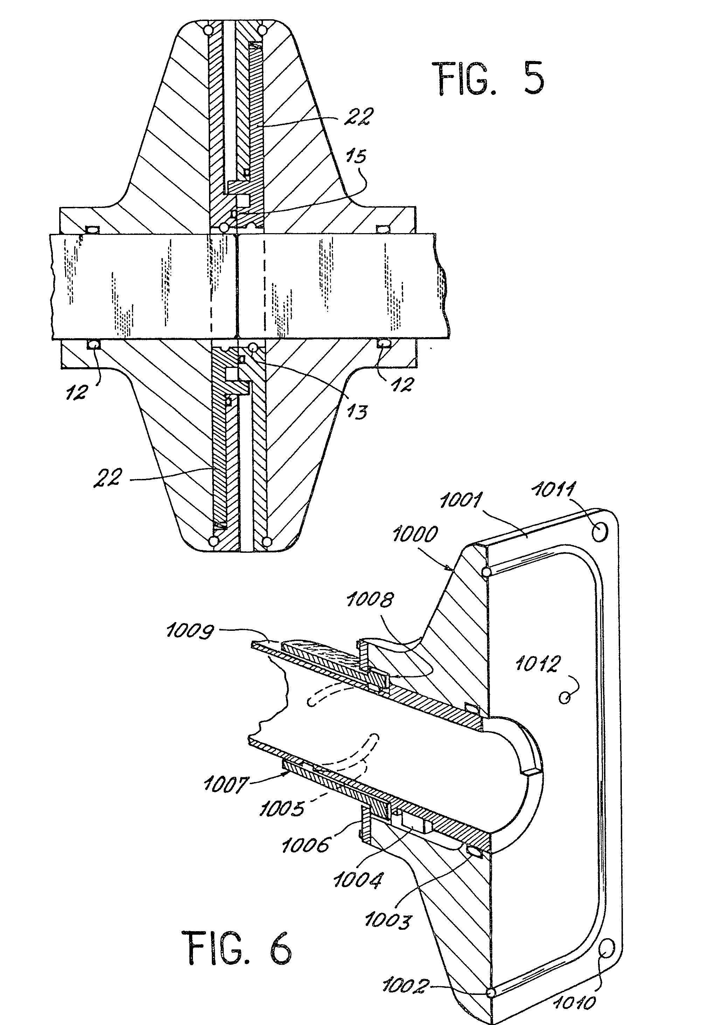

Figure 5, l'accouplement a été fait par l'encastrement dispositif d'accouplement 61 dans le dispositif correspondant 62. Cette action a eu pour effet d'effacer le volet obturateur 31 qui a été entraîné vers le haut par l'ensemble 71-81 et de mettre en état de contrainte le ressort 41 dont on ne voit dans la coupe qu'une spirale. Le reste du ressort ne se trouve pas dans le plan de coupe. Chacun des deux volets obturateurs s'efface ainsi devant les fibres optiques qui lui sont associées.

Les figures suivantes représentent un deuxième mode de réalisation de l'invention qui diffère essentiellement du précédent par les détails suivants :

    1 . Présence de systèmes de verrouillage des volets obturateurs dans les positions hautes ou basses ;

    2 . Mode d'assemblage des embouts ;

    3 . Coulissement des fibres grace à une rampe hélicoïdale et permettant de les mettre bout à bout lors de l'accouplement.;

La figure 6, représente en perspective un embout 1000 coupé suivant le plan diamètral des fibres et de symétrie de l'embout. La référence 1001 désigne le plan de joint. Ce plan comporte dans sa partie périphérique un joint 1002 d'étanchéité. Dans le corps 1000 et dans sa partie centrale est ménagée une partie cylindrique creuse dans laquelle s'emboite le faisceau de fibres optiques 1009. Celles-ci sont rendues solidaires du corps par un clavetage 1004. Une bague cylindrique 1007 est interposée comme indiqué entre le corps de fibre et l'embout connecteur. Cette bague est maintenue d'une part par une butée de recul 1008 et une butée d'avance 1006. Elle porte une rainure d'entraînement hélicoïdale en relief 1005 qui coulisse dans une rainure pratiquée dans l'enveloppe des fibres. On voit également en 1012 un passage de doigt de blocage. En 1010 et 1011 sont visibles respectivement les trous de fixation du plateau et un dispositif d'emboitement. On voit clairement que la rotation de la bague qui est maintenue par ses butées permet la translation des fibres suivant leur axe.

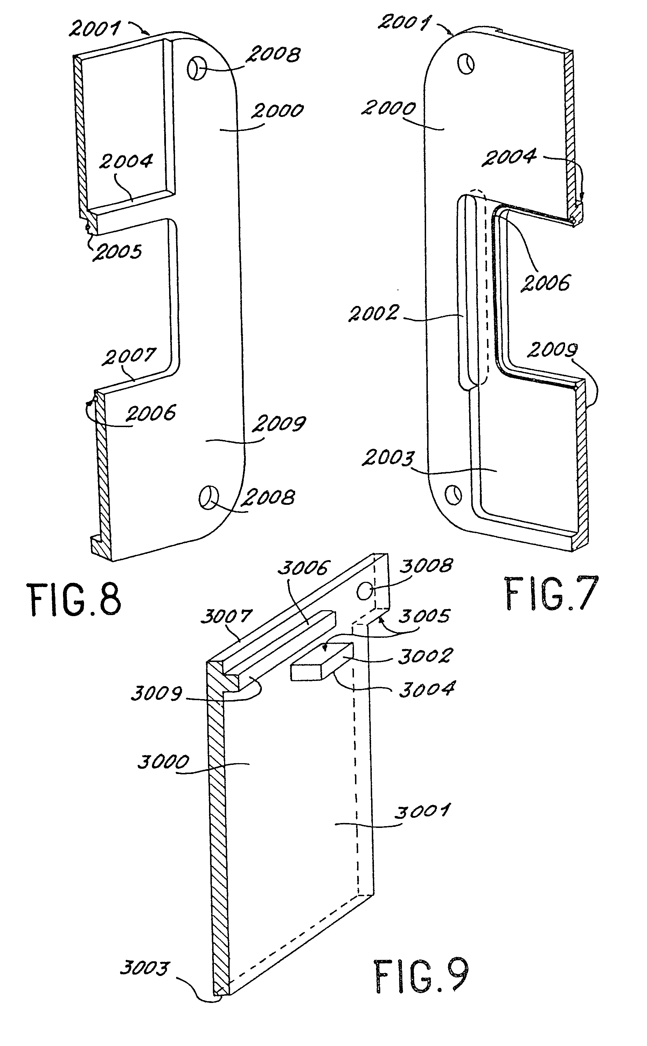

Sur les figures 7 et 8 sont représentées en perspective des vues de chaque côté du plateau 2000 dont le plan de joint 2001 est fixé sur le plan 1001 par l'intermédiaire des trous 2008 de fixation et d'écrous non représentés.

Le logement du ressort analogue à celui qui a été décrit plus haut est visible en 2002. Il a la forme d'une fente. Le plateau comporte une échancrure rectangulaire 2003, qui reçoit le volet obturateur. Le plateau comporte en outre une butée 2004 pour le poussoir 3002 du volet obturateur qui sera décrit plus loin, une butée de fermeture 2005, qui coopérera du moins avec une butée 3006 du volet.

En 2006 on voit un joint d'étanchéité, en 2007 une butée d'ouverture du volet et en 2003 son plan de glissement. Le volet 3000 (figure 9) glisse sur le plan 2009. Il comprend en 3002 un poussoir, qui comporte la butée d'entraînement 3003, et une butée d'ouverture 3004. On voit également la portée du ressort 3005, une butée de fermeture 3006, une butée de blocage et de sécurité 3007, 3008 et 3009 désignent respectivement un perçage et une butée de verrouillage.

Il est bien entendu que l'embout associé comporte les mêmes organes et que de plus, ce sont les organes associés à ce dernier embout qui assurent le déplacement du volet obturateur, par action sur les butées d'entraînement de l'obturateur, ceci de la façon qui a été décrite en référence aux figures précédentes.

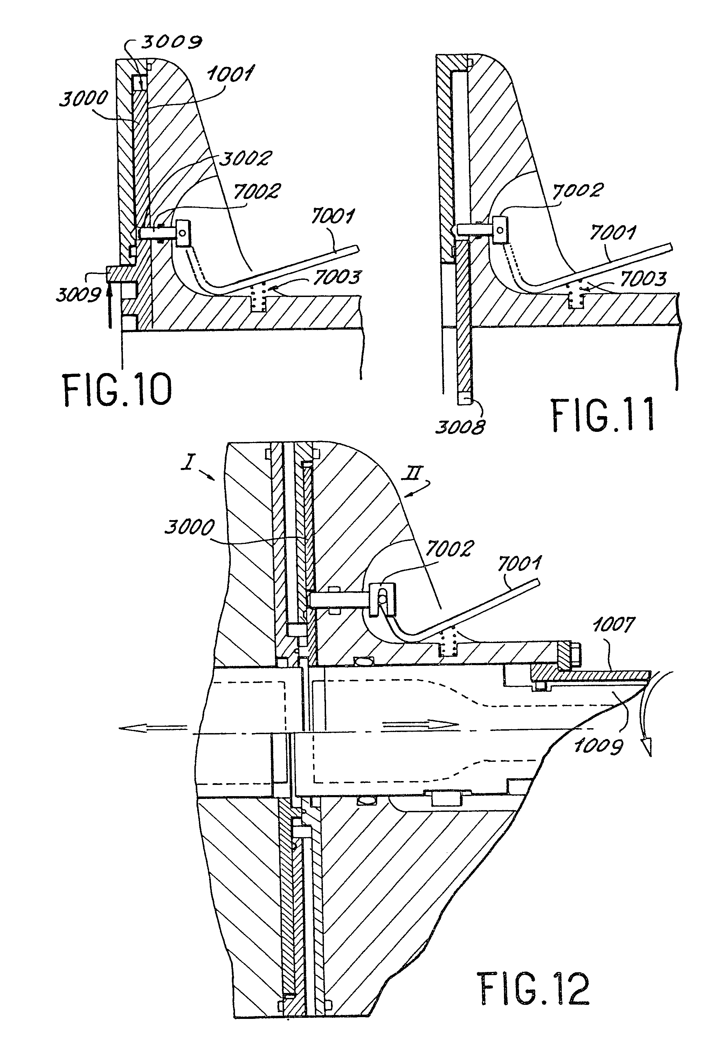

Figure 10 et figure 11, sont représentées en coupe longitudinale l'assemblage embout de connecteur et volet obturateur en position ouverte (obturateur effacé) et fermée (obturateur masquant les fibres optiques). Les mêmes références désignent les mêmes organes que sur les figures précédentes. On voit le demi-corps de l' embout avec son plan de joint 1001 sur lequel est fixé le demi-plateau 2000 dans lequel glisse dans les deux sens le volet obturateur 3000.

Le perçage de sécurité 3008 du volet obturateur est en dehors du plan de coupe. En position ouverte le volet est bloqué par un doigt de blocage 7002, qui s'engage dans ce trou. Ce doigt est solidaire d'un levier de manoeuvre 7001. Le doigt coulisse à travers un joint d'étanchéité pratiqué dans l'embout. Il est maintenu par un ressort de rappel qui s'appuie sur le corps de l'embout et travaille en compression.

En position fermée le doigt 7002 porte sur la butée de verrouillage du volet obturateur 3009. Dans les deux positions le volet obturateur est donc bloqué, soit par son trou de verrouillage soit par sa butée de verrouillage.

Il est débloqué par action sur le levier 3001, ceci lors des opérations de connection.

Il est à remarquer que le poussoir 3002 fait saillie sur l'ensemble et que c'est lui l'élément moteur de la connexion et de la déconnexion.

On va décrire les phases successives de la déconnexion, celles de la connexion s'opérant de la façon inverse.

L'état initial est représenté figure 12. Le levier

est en position haute. Les deux corps du connecteur sont en contact et les fibres connectées sont elles aussi en contact; les volets obturateurs sont escamotés.

La première étape consiste à actionner pour chaque embout la bague 1007. Ceci a pour effet de faire glisser vers la droite les fibres de l'embout de droite, et vers la gauche les fibres de l'embout de gauche.

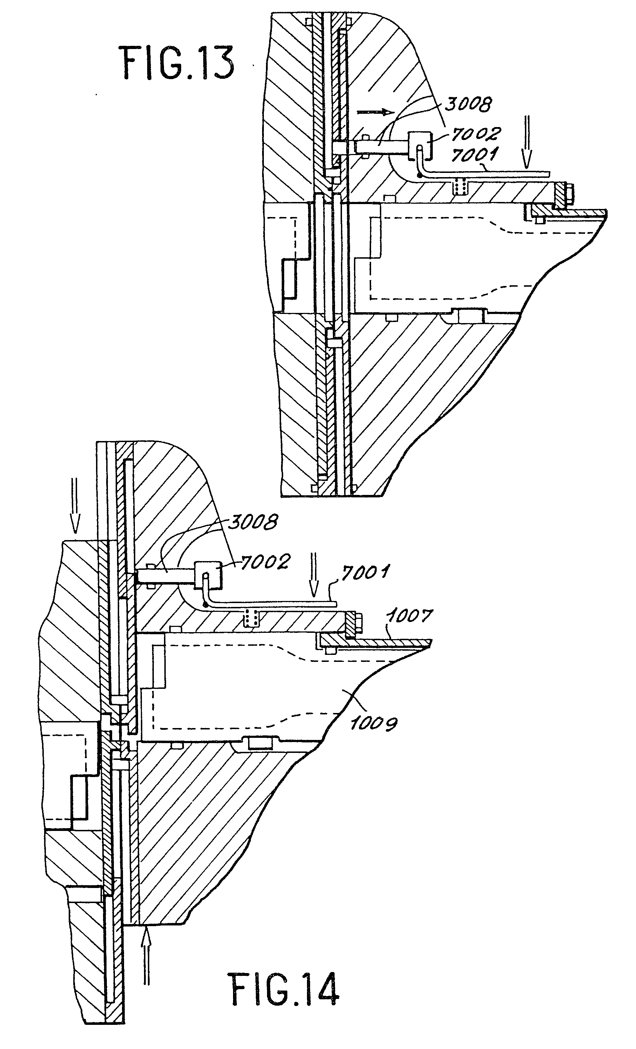

Figure 13, les deux leviers 7001 ont été abaissés, ce qui permet de donner leur liberté de déplacement vertical aux deux volets obturateurs à la suite du retrait des doigts 3008.

Figure 14, l'opérateur tout en maintenant les leviers abaissés, fait glisser vers le haut l'ensemble de droite et vers le bas l'ensemble de gauche. Les volets obturateurs actionnés par leurs ressorts respectifs reviennent à la position fermée. La fin de cette phase s'obtient en même temps que le désaccouplement du dispositif hermaphrodite.

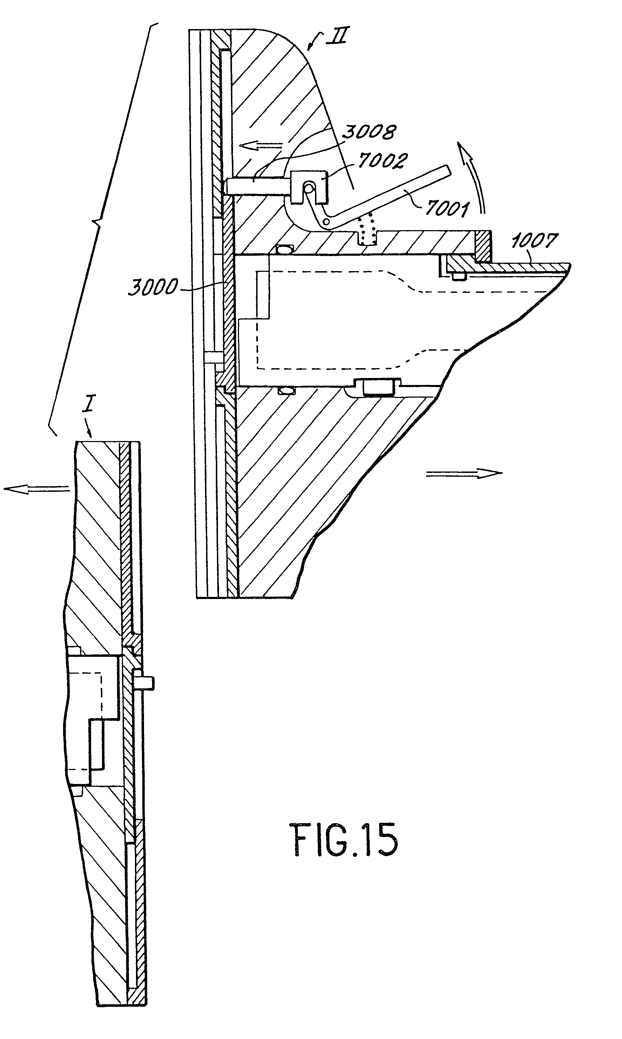

La dernière phase figure 15 se caractérise par le désacouuplement définitif; le levier est lâché, et le volet maintenu par action du doigt sur la butée de verrouillage du volet et les fibres sont mises en mouvement par action sur la bague tournante 1007.

Pour la connexion de deux demi-connecteurs, les opérations se dérouleront en sens inverse après engagement des dispositifs hermaphrodites.

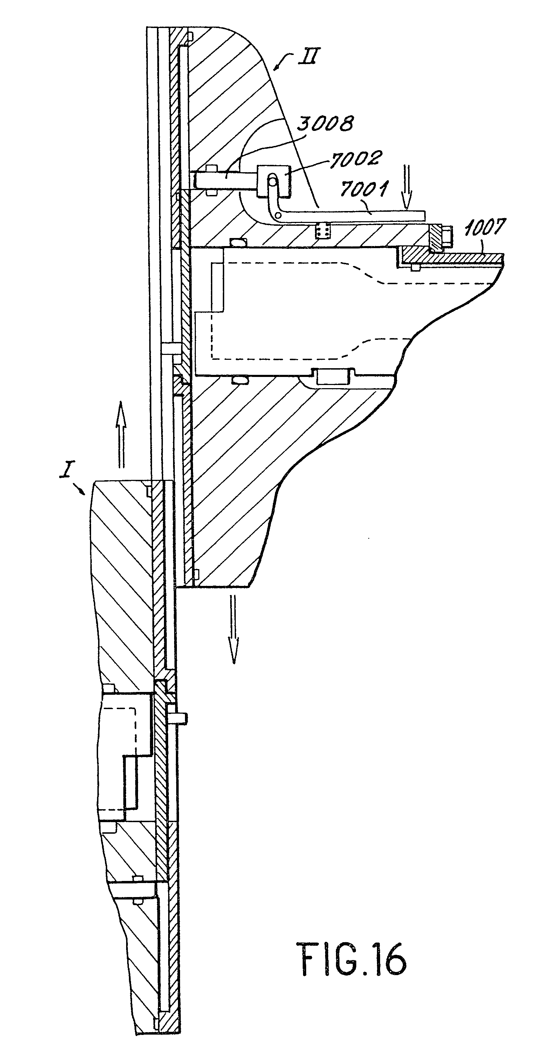

Après nettoyage des faces avant figure 16, les demi-connecteurs sont placés tête-bêche l'un contre l'autre par glissement selon leurs plans 2009; il y a interpénétration des dispositifs d'accouplement hermaphrodite lors de cette manoeuvre par appui sur les leviers 3001, les doigts de blocage 3002 sont escamotés rendant leur liberté aux volets obturateurs. En saisissant chaque connecteur par sa partie arrière l'action sur le levier est systématique. de plus si les deux volets n'ont pas leur liberté l'engagement n'est pas possible.

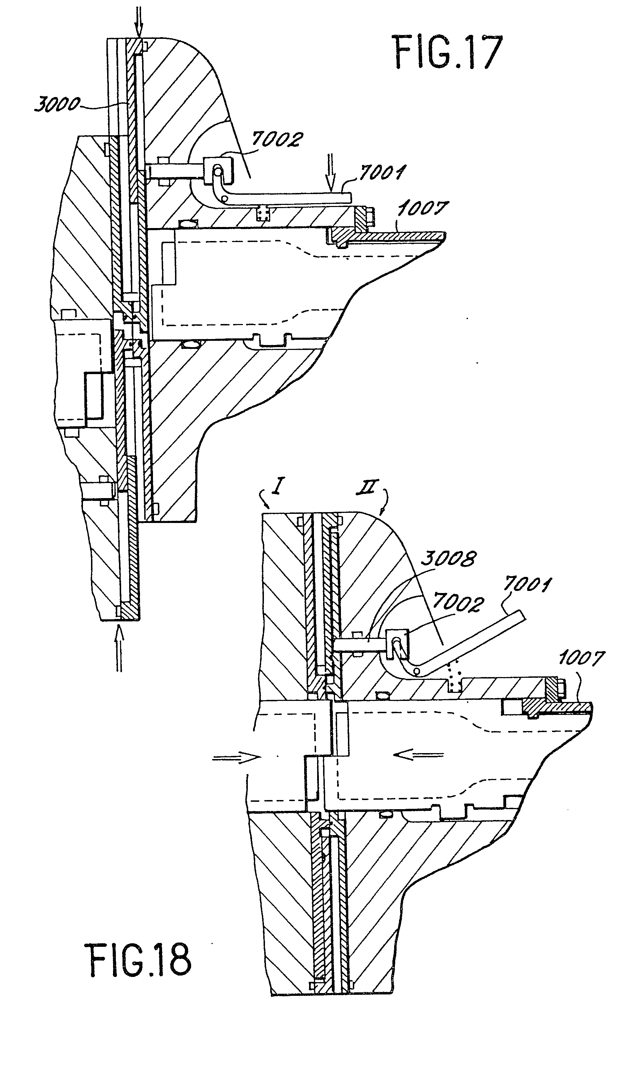

Phase 2, figure 17, la butée 2004 de chaque demi-

8

connecteur entre en contact avec la butée d'entraînement 3003 du volet de l'autre demi-connecteur assurant l'entraînement vers le haut du volet de droite et vers le bas du volet de gauche. Ce glissement assure le nettoyage et l'entraînement des impuretés hors de la zone d'ouverture.

Phase 3, figure 18, de la connexion , chaque demi-connecteur est ouvert et la butée 3004 entre en contact avec la butée 2007 du plateau 2000, bloquant les deux demi-connecteurs. En relâchant les leviers, on permet l'introduction des doigts de blocage dans les logements 3008 des volets.

Enfin phase 4, par action sur les bagues 1007 les fibres sont remises en contact.

Une fois le connecteur mis en oeuvre, même une action accidentelle sur le levier ne permet pas la déconnexion car les fibres sont bloquées par le clavetage 1004, qui empêche leur déplacement longitudinal.

9

R E V E N D I C A T I O N S

1. Connecteur pour fibres optiques comportant deux embouts (I,II), et des moyens d'accouplement de ces deux embouts, caractérisé essentiellement par la présence d'un volet protecteur (31,32) sur chaque embout (I,II), des moyens mécaniques (81,111,82,112) étant prévus sur chaque embout pour l'effacement du volet de l' embout auquel on va le connecter, et sa remise en place automatiquement lors de l'opération de déconnexion.

2. Connecteur selon la revendication 1, caractérisé en ce que chaque volet protecteur (31,32) est associé à des moyens de guidage (21,22) dans l'embout avec lequel il est assemblé, lesdits moyens de guidage étant tels que le déplacement du volet (31,32) se produit dans un plan sensiblement perpendiculaire à l'axe des fibres optiques.

3. Connecteur selon la revendication 1 ou 2, caractérisé en ce que chaque volet protecteur (31,32) a des moyens de guidage (21,22) dans l'embout avec lequel il est assemblé, un ressort (41,42) travaillant en compression le maintenant normalement dans la position dans laquelle il masque les fibres.

4. Connecteur selon l'une des revendications 1 à 3, caractérisé en ce que des moyens de verrouillage (3008, 7001,7002) sont prévus pour chacune des positions "ouvert" et "fermé" du volet protecteur.

5. Connecteur selon l'une des revendications 1 à 4, caractérisé en ce que chaque embout comporte un organe mécanique permettant le déplacement des fibres suivant leur axe (1005), celles-ci étant décalées avant connexion, et en contact physique avec les fibres de l' autre embout après connexion.

6. Connecteur selon la revendication 5, caractérisé en ce que l'organe mécanique est constitué par une rainure (1005) en relief disposée hélicoïdalement dans un

10

cylindre (1009) situé à l'extrémité de l'embout et dans lequel le faisceau de fibres optiques est introduit, la gaine de celui-ci comportant une rainure complémentaire à la rainure en relief, le déplacement du faisceau étant provoqué par une bague cylindrique montée coaxialement avec le cylindre.

7. Connecteur selon l'une des revendications 1 à 6, caractérisé en ce que les embouts possèdent des moyens d'accouplement hermaphrodites.

8. Faisceau de fibres optiques caractérisé en ce qu' il comporte un connecteur suivant l'une quelconque des revendications 1 à 7.

FIG. 1

FIG. 3

FIG. 2

FIG. 4

FIG. 5

22
15
12
13
12
22

FIG. 6

1001
1011
1000
1008
1009
1012
1007
1005
1006
1004
1003
1002
1010

2001
2008
2000
2004
2005
2007
2006
2009
2008

**FIG.8**

2001
2000
2004
2006
2002
2009
2003

**FIG.7**

3006
3008
3007
3005
3002
3004
3009
3000
3001
3003

**FIG.9**

FIG.10

FIG.11

FIG.12

FIG.13

3008
7002
7001

FIG.14

3008
7002
7001
1007
1009

FIG.15

FIG.16

FIG.17

3000
7002
7001
1007

FIG.18

I  II
3008
7002  7001
1007

## RAPPORT DE RECHERCHE EUROPEENNE

Office européen
des brevets

EP 80 40 1214

| Catégorie | Citation du document avec indication, en cas de besoin, des parties pertinentes | Revendication concernée | |
|---|---|---|---|
| | **DOCUMENTS CONSIDERES COMME PERTINENTS** | | **CLASSEMENT DE LA DEMANDE (Int. Cl. ³)** |
| | JP - A - 53 66 244 (G. COCITO)  * figures 1,2 *  & US - A - 4 171 867  * figures 2-3 * | 1,8 | G 02 B 7/26 |
| | — — | | |
| | TECHNICAL DIGEST-WESTERN ELECTRIC, no. 55, juillet 1979 NEW YORK (US) L.B. BLOODWORTH et al.: "Fiber lightguide connector", pages 1,2.  * en entier * | 1,3-5, 7,8 | **DOMAINES TECHNIQUES RECHERCHES (Int. Cl. ³)**  G 02 B 7/26 |
| | — — — — | | |

**CATEGORIE DES DOCUMENTS CITES**

X: particulièrement pertinent
A: arrière-plan technologique
O: divulgation non-écrite
P: document intercalaire
T: théorie ou principe a la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 09-10-1980 | MALIC |

OEB Form 1503.1   06.78